# EUROPEAN PATENT SPECIFICATION

(11) **EP 3 204 438 B1**
(45) Date of publication and mention of the grant of the patent: **02.10.2019**
(21) Application number: 15775434.2
(22) Date of filing: 05.10.2015
(51) Int. Cl.: C08G 18/48, C08G 18/63, C08G 18/66, C08G 18/76, C08G 18/18, C08G 18/20, C08G 18/32

(54) **IMPROVEMENTS RELATING TO POLYURETHANES**
VERBESSERUNGEN IM ZUSAMMENHANG MIT POLYURETHANEN
AMÉLIORATIONS CONCERNANT LES POLYURÉTHANNES

(30) Priority: 07.10.2014 IN 5027CH2014
(43) Date of publication of application: 16.08.2017
(73) Proprietor: Shell Internationale Research Maatschappij B.V., 2596 HR The Hague (NL)
(72) Inventor: PRADHAN, Pranaya Man Singh, Bengaluru 560099 (IN); VRISHABADOSS, Mohandoss, Bengaluru 560099 (IN); KUMAR, Arvind, Bengaluru 560099 (IN); DHANAPAL, Prem, Bangalore 560099 (IN)
(74) Representative: Shell Legal Services IP
(86) International application number: PCT/EP2015/072888
(87) International publication number: WO 2016/055395

(56) References cited:
- WO-A1-01/25305

## Description

### Field of the Invention

This invention relates to the preparation of polyurethane foams. In particular, though not exclusively, this invention relates to processes and reaction systems for making polyurethane foams, and to polyurethane foams obtainable thereby.

### Background to the Invention

Polyurethane foams have found extensive use in a multitude of industrial and consumer applications. This popularity is due to their wide-ranging mechanical properties and ability to be easily manufactured.

The use of a catalyst in preparing polyurethanes by the reaction of a polyisocyanate (e.g. a diisocyanate), a polyol and perhaps additional ingredients is known. The catalyst is typically employed to promote at least one of two primary reactions (and sometimes secondary crosslinking reactions), that must proceed simultaneously and competitively at balanced rates to ensure stable processing and provide polyurethanes with the desired physical characteristics. The first primary reaction (usually referred to as the gel reaction) is a chain-extending isocyanate-hydroxyl reaction by which a hydroxyl-containing molecule is reacted with an isocyanate-containing molecule to form a urethane. This provides structural stability to foams and provides a polyurethane-containing secondary nitrogen atom in the urethane groups. The second primary reaction is an isocyanate-water reaction (usually referred to as the blow reaction) by which an isocyanate-terminated molecule is extended and by which carbon dioxide is generated to blow or assist in the blowing of foam. This second reaction may be assisted or replaced by an extraneous blowing agent, such as a halogenated, normally liquid hydrocarbon, or carbon dioxide, but is essential if all or even part of the gas required for foam generation is to be generated by this in situ reaction (e.g. in the preparation of "one-shot" flexible polyurethane foams).

The primary reactions must proceed simultaneously at optimum balanced rates relative to each other in order to obtain a good foam structure. If carbon dioxide evolution is too rapid in comparison with chain extension, the foam will collapse. If the chain extension is too rapid in comparison with carbon dioxide evolution, foam rise will be restricted, resulting in a high-density foam with a high percentage of poorly defined cells. The foam will not be stable resulting in foam shrinkage during processing or storage.

Typically, the catalysts used for making polyurethanes are of two general types: tertiary amines (mono and poly) and organo-metal, in particular organo-tin, compounds. Organo-metallic catalysts predominately favour the gelling reaction, while amine catalysts exhibit a more varied range of blow/gel balance. Tertiary amines can be effective as catalysts for both the blow and the gel reactions and are generally used in combination with the organo-metal catalysts.

Numerous studies have shown that organo-tin catalyzed urethane reactions do not follow first order kinetics, and that the organo-tin catalysts promote a number of side reactions. The catalytic activity of organo-tin compounds can be significantly increased by addition of tertiary amines, which act in synergy with the organo-tin compounds to promote gelling in particular.

One particular class of polyurethane foam is known as viscoelastic (VE) or "memory" foam. Viscoelastic foams exhibit a time-delayed and rate-dependent response to an applied stress. They have low resiliency and recover slowly when compressed. These properties are often associated with the glass transition temperature (Tg) of the polyurethane. Viscoelasticity is often manifested when the polymer has a Tg at or near the use temperature, which is room temperature for many applications.

Most viscoelastic polyurethane foam is produced at low isocyanate index (100 times the mole ratio of -NCO groups to NCO-reactive groups in the reaction mixture). Often, the isocyanate index is at most about 120, or even at most about 100 or at most about 90.

Various synthetic approaches have been used to make viscoelastic foam. Formulators have modified the amount and type of polyol(s), polyisocyanate, surfactants, fillers, or other components, to arrive at foams having low resilience, good softness, and the right processing characteristics.

U.S. Pat. No. 5,919,395 discloses a polyol combination for making viscoelastic foams that contains a 2500 to 6500 molecular weight polyol having a functionality of 2.5 to 6, optionally with a polymer stably dispersed therein, and a rigid polyol having molecular weight of 300 to 1000 and a functionality of 2.5 to 6.

Unfortunately low-index foam formulations are extremely sensitive to small changes in catalyst and surfactant amounts, so the processing window is undesirably narrow. Special, expensive silicones are often needed to avoid shrinkage or foam collapse. Moreover, when toluene diisocyanate (TDI) or methylene diphenyl diisocyanate (MDI) is used to make viscoelastic foam at low index, the foams can contain undesirably high levels of toluene-diamines or methylenedianilines.

It is an object of the invention to address at least one problem associated with the prior art.

### Statements of the Invention

According to a first aspect of the invention there is provided a process for making a polyurethane foam, the process comprising combining, at an isocyanate index of at most 120:
(a) a polyol component comprising, per hundred parts by weight: (i) from 10 to 70 parts by weight of a first polyol having a number average molecular weight in the range of from 2000 to 12000 Dalton, and a functionality in the range of from 2 to 6; and (ii) from 90 to 30 parts by weight of a second polyol having a number average molecular weight in the range of from 300 to 1500 Dalton, a functionality in the range of from 2 to 6, and a hydroxyl value in the range of from 100 to 600 mg KOH/g;
(b) an amine catalyst component consisting of:
   (i) in the range of from 0.23 to 0.6 parts per hundred parts by weight of polyol component (pphp) of triethylenediamine or a delayed action form thereof, and optionally in the range of from 0.05 to 0.20 pphp bis(dimethylaminoethyl)ether or a delayed action form thereof; or
   (ii) an amount of one or more tertiary amines, selected from N,N,N',N'-tetramethyl hexamethylenediamine; N,N-dimethyl cyclohexylamine; N-(2-dimethylaminoethyl)-N'-methylpiperanize; N,N,N',N'-tetramethylethylene diamine; N,N,N',N',N"-pentamethyldiethylene triamine; Bis(2-dimethylaminoethyl) ether; N,N-dimethylaminoethoxyethanol; N,N-dimethylaminoethanol; and N,N,N'-trimethylaminoethyl ethanolamine, or delayed action forms thereof having a catalytic gelling and/or blowing activity, as determined according to the description, equivalent to a combination of in the range of from 0.2 to 0.6 pphp of triethylenediamine or a delayed action form thereof, and optionally in the range of from 0.05 to 0.20 pphp bis(dimethylaminoethyl)ether or a delayed action form thereof; and
(c) foam-forming reactants comprising an aromatic polyisocyanate,
to obtain the polyurethane foam.

The term "molecular weight" is used herein to refer to number average molecular weight, unless otherwise specified or context requires otherwise. The number average molecular weight of a polyol can be measured by gel permeation chromatography (GPC) or vapor pressure osmometry (VPO).

The term "hydroxyl value" is used herein to refer to the milligrams of potassium hydroxide equivalent to the hydroxyl content in one gram of polyol determined by wet method titration.

The term "equivalent weight" is used herein to refer to the weight of polyol per reactive site. The equivalent weight is 56100 divided by the hydroxyl value of the polyol.

The term "functionality" is used herein to refer to the average number of reactive sites per molecule of polyol. The functionality is determined by the number average molecular weight of the polyol divided by the equivalent weight of the polyol.

The catalytic gelling and blowing activity of a tertiary amine may be readily determined based on the method disclosed in "Polyurethane Catalysis by Tertiary Amines", Roger van Maris et al, Journal of Cellular Plastics, Volume 41 - July 2005, 305. This reference, which is incorporated herein by reference, discloses on pp. 307 a catalytic activity titration method employing a standardised reaction system for determining catalytic activity. In Table 1, the reference provides gelling and blowing activities for a range of tertiary amines, including triethylenediamine and bis(dimethylaminoethyl)ether, leading the inventors to envisage a range of amine catalyst components having a catalytic blowing and gelling activity equivalent to a combination of in the range of from 0.2 to 0.6 pphp of triethylenediamine or a delayed action form thereof, and optionally in the range of from 0.05 to 0.20 pphp bis(dimethylaminoethyl)ether or a delayed action form thereof.

The terms "catalytic gelling activity" and "catalytic blowing activity" as used herein thus refer to standardised activities measured according to the above-mentioned Roger van Maris et al reference.

It has been found that the amine catalyst component comprising a relatively high concentration of a tertiary amine catalyst, in particular triethylenediamine, advantageously facilitates processing of the polyol component, particularly in the substantial absence of organo-metal gelling catalyst.

The polyol component comprises a first polyol of relatively high molecular weight and a second polyol of relatively low molecular weight, which combination is generally suited to making viscoelastic foams. Such foams are notoriously challenging to process, a fact which the process according to the first aspect of the invention helps to address. For example, it has been found that the amine catalyst component (in the substantial absence of organometallic catalyst) can reduce full rise times compared to the prior art whilst providing foams having desirable viscoelastic properties.

It has further been found that the amine catalyst component can advantageously avoid undesirably high levels of toluene-diamines in the foam.

Advantageously, the process may be carried out in the substantial absence of organo-metal, in particular organo-tin gelling catalyst. In an embodiment, the process is carried out in the substantial absence of any metal-containing species that are catalytically active in the gelling reaction.

Without wishing to be bound by theory, it is believed that the catalytic activity offered by a higher concentration of aminic catalyst such as triethylenediamine and optionally bis(dimethylaminoethyl)ether, in the substantial absence of organo-metal gelling catalyst, can facilitate an advantageous balance between the competing reactions involved in making polyurethane foam. In particular, the amine catalyst component can facilitate an advantageous balance between the primary blow and gel reactions involved in polyurethane formation. This balance allows viscoelastic foams with desirable properties to be made with reduced full rise times and may also be responsible for mitigating build-up of aromatic diamines, such as toluene-diamine and methylenedianiline.

The advantageous balancing achieved by the amine catalyst component is surprising considering that triethylenediamine is a relatively strong gelling catalyst, particularly given that prior art approaches involving organo-metal catalysts as strong gelling catalysts led to build-up of aromatic diamines.

The present specification also discloses reaction systems or kits for use in the process. According to another aspect there is disclosed a reaction system for making a polyurethane foam, the system providing for an isocyanate index of at most 120, and comprising:
(a) a polyol component comprising, per hundred parts by weight: (i) from 10 to 70 parts by weight of a first polyol having a number average molecular weight in the range of from 2000 to 12000 Dalton, and a functionality in the range of from 2 to 6; and (ii) from 90 to 30 parts by weight of a second polyol having a number average molecular weight in the range of from 300 to 1500 Dalton, a functionality in the range of from 2 to 6, and a hydroxyl value in the range of from 100 to 600 mg KOH/g;
(b) an amine catalyst component consisting of:
   (i) a combination of in the range of from 0.2 to 0.6 parts per hundred parts by weight of polyol component (pphp) of triethylenediamine or a delayed action form thereof, and optionally in the range of from 0.05 to 0.20 pphp bis(dimethylaminoethyl)ether or a delayed action form thereof; or
   (ii) an amount of one or more tertiary amines or delayed action forms thereof having a catalytic gelling and/or blowing activity equivalent to (i); and
(c) foam-forming reactants comprising an aromatic polyisocyanate.

Suitably the system may be substantially free from organo-metal, in particular organo-tin gelling catalyst. In an embodiment, the system is substantially free from any metal-containing species that are catalytically active in the gelling reaction.

The invention also embraces, from yet another aspect, foams obtainable by the process according to the aforementioned first aspect of the invention.

According to still another aspect of the invention, there is provided the use of an amine catalyst component consisting of:
(i) a combination of in the range of from 0.23 to 0.6 parts per hundred parts by weight of polyol component (pphp) of triethylenediamine or a delayed action form thereof, and optionally in the range of from 0.05 to 0.20 pphp bis(dimethylaminoethyl)ether or a delayed action form thereof; or
(ii) an amount of one or more tertiary amines, selected from N,N,N',N'-tetramethyl hexamethylenediamine; N,N-dimethyl cyclohexylamine; N-(2-dimethylaminoethyl)-N'-methylpiperanize; N,N,N',N'-tetramethylethylene diamine; N,N,N',N',N"-pentamethyldiethylene triamine; Bis(2-dimethylaminoethyl) ether; N,N-dimethylaminoethoxyethanol; N,N-dimethylaminoethanol; and N,N,N'-trimethylaminoethyl ethanolamine, or delayed action forms thereof having a catalytic gelling and/or blowing activity, as determined according to the description, equivalent to a combination of in the range of from 0.2 to 0.6 pphp of triethylenediamine or a delayed action form thereof, and optionally in the range of from 0.05 to 0.20 pphp bis(dimethylaminoethyl)ether or a delayed action form thereof;
(iii) in a process of making a polyurethane foam, the process comprising combining, at an isocyanate index of at most 120:
   (a) a polyol component comprising, per hundred parts by weight: (i) from 10 to 70 parts by weight of a first polyol having a number average molecular weight in the range of from 2000 to 12000 Dalton, and a functionality in the range of from 2 to 6; and (ii) from 90 to 30 parts by weight of a second polyol having a number average molecular weight in the range of from 300 to 1500 Dalton, a functionality in the range of from 2 to 6, and a hydroxyl value in the range of from 100 to 600 mg KOH/g;
   (b) said amine catalyst component; and
   (c) foam-forming reactants comprising an aromatic polyisocyanate,
   (d) to obtain the polyurethane foam,
   (e) for the purpose of counteracting the formation of aromatic diamine in the polyurethane foam and/or reducing full rise time.

Suitably the use may be in the substantial absence of organo-metal, in particular organo-tin gelling catalyst. In an embodiment, the use may be in the substantial absence of any metal-containing species that are catalytically active in the gelling reaction.

### Detailed Description of the Invention

The polyol component (a) used in aspects of the invention comprises, per hundred parts by weight: (i) in the range of from 10 to 70 parts by weight of the first polyol; and (ii) in the range of from 90 to 30 parts by weight of the second polyol.

The polyol component consists of the first and second polyols, optionally including one or more dispersed polymers (which may form part of the first polyol). The polyol component may be provided as a polyol mixture, or the first and second polyols may be provided separately to form the polyol component in situ.

In general, the first and/or second polyol may be prepared by ring-opening polymerization of alkylene oxide, in particular by reacting a hydroxyl containing compound with an alkylene oxide, such as for example ethylene oxide, propylene oxide, butylene oxide and/or mixtures thereof. The alkylene oxide may, for example, be propylene oxide, optionally together with one or more other alkylene oxides like ethylene oxide or butylene oxide. Suitable hydroxyl containing starting compounds include polyfunctional alcohols, generally containing from 2 to 8 hydroxyl groups. Examples of such alcohols comprise glycols, glycerol, pentaerythritol, trimethylolpropane, triethanolamine, sorbitol and mannitol. Advantageously, propylene glycol (MPG), glycerol or a combination of both may be is used as starting compound. A strong base like potassium hydroxide or a similar metal hydroxide salt may be used as a catalyst in ring-opening polymerization of alkylene oxide to obtain a polyol. However, catalysts such as composite metal cyanide complex catalysts can also be used.

In an embodiment the first and/or second polyol may be prepared by ring-opening polymerization of alkylene oxide in the presence of a composite metal cyanide complex catalyst. Composite metal cyanide complex catalysts are frequently also referred to as double metal cyanide (DMC) catalysts. A composite metal cyanide complex catalyst is typically represented by the following formula (1):

(1) M¹ₐ[M²_{b}(CN)_{c}]_{d}.e(M¹_{f}X_{g}).h(H₂O).i(R)

wherein each of M¹ and M² is a metal, X is a halogen atom, R is an organic ligand, and each of a, b, c, d, e, f, g, h and i is a number which is variable depending upon the atomic balances of the metals, the number of organic ligands to be coordinated, etc.

In the above formula (1), M¹ is preferably a metal selected from Zn(II) or Fe(II). In the above formula, M² is preferably a metal selected from Co(III) or Fe(III). However, other metals and oxidation states may also be used, as is known in the art.

In the above formula (1), R is an organic ligand and is preferably at least one compound selected from the group consisting of an alcohol, an ether, a ketone, an ester, an amine and an amide. As such an organic ligand, a water-soluble one may be used. Specifically, one or more compounds selected from tert-butyl alcohol, n-butyl alcohol, iso-butyl alcohol, tert-pentyl alcohol, isopentyl alcohol, N, N-dimethyl acetamide, glyme (ethylene glycol dimethyl ether), diglyrste (diethylene glycol dimethyl ether), triglyme (triethylene glycol dimethyl ether), ethylene glycol mono-tert-butylether, iso-propyl alcohol and dioxane, may be used as organic ligand(s). The dioxane may be 1,4-dioxane or 1,3-dioxane and is preferably 1,4-dioxane. Most preferably, the organic ligand or one of the organic ligands in the composite metal cyanide complex catalyst is tert-butyl alcohol. Further, as an alcohol organic ligand, a polyol, preferably a polyether polyol may be used. More preferably, a poly (propylene glycol) having a number average molecular weight in the range of from 500 to 2,500 Dalton, preferably 800 to 2,200 Dalton, may be used as the organic ligand or one of the organic ligands. Most preferably, such poly(propylene glycol) is used in combination with tert-butyl alcohol as organic ligands. The composite metal cyanide complex catalyst can be produced by known production methods.

In an embodiment, the polyol component comprises, per hundred parts by weight, in the range of from 30 to 70 parts by weight of the first polyol, and in the range of from 70 to 30 parts by weight of the second polyol. In particular, the polyol component may suitably comprise, per hundred parts by weight, in the range of from 40 to 60 parts by weight of the first polyol, and in the range of from 60 to 40 parts by weight of the second polyol. In an embodiment, the polyol component comprises about 50 parts by weight of each of the first and second polyols.

The first and/or second polyol may comprise a mixture of polyols having, on average, the defined properties.

The first polyol has a number average molecular weight in the range of from 2000 to 12000 Daltons, and a functionality in the range of from 2 to 6.

In an embodiment the first polyol has a number average molecular weight in the range of from 2000 to 8000 Daltons, in particular in the range of from 2000 to 6000 Daltons. Suitably, the first polyol may have a number average molecular weight in the range of from 2500 to 4000 Daltons.

In an embodiment the first polyol has a functionality in the range of from 2 to 5, in particular in the range of from 2.5 to 4. Suitably, the first polyol may have a functionality in the range of from 2.5 to 3.5.

In an embodiment, the first polyol has a hydroxyl value of less than 200 mg KOH/g, in particular in the range of from 10 to 100 mg KOH/g. Suitably, the first polyol may have a hydroxyl value in the range of from 30 to 80 mg KOH/g.

The first polyol may advantageously be propylene oxide (PO)- and optionally ethylene oxide (EO)-derived, i.e. comprise PO and/or EO derived oxyalkene moieties.

In an embodiment, the first polyol comprises only PO moieties (in combination with a hydroxyl containing starting compound). Where EO moieties are present in the polyol they may advantageously be randomly co-polymerised with PO moieties. In an embodiment, the polyol contains EO moieties in an amount in the range of from 1% w/w to 25 % w/w, in particular in the range of from 5% w/w to 20 % w/w. The amount of EO moieties in % w/w is based on the total of oxyalkylene units present and may be measured, for example, according to ASTM D4875.

In an embodiment, the first polyol comprises primary hydroxyl groups. In an embodiment, the first polyol has a percentage of primary hydroxyl groups in the range of from 1 to 100, in particular in the range of from 5 to 90. Suitably, the first polyol may have a percentage of primary hydroxyl groups in the range of from 10 to 70.

In an embodiment, the first polyol has a solid polymer stably dispersed therein, i.e. forms a polymer polyol. The molecular weight and functionality of the first polyol may thus be those of a base polyol of a polymer polyol. Any such dispersed polymer forms part of the polyol component and is considered part of the first polyol, save that the properties defined for the first polyol (e.g. molecular weight, functionality) are those of the base polyol alone.

In general, a polymer polyol is a dispersion of a solid polymer in a liquid polyol. Such systems are well known in the art and are normally prepared by polymerising one or more ethylenically unsaturated monomers in the presence of a free radical catalyst.

Examples of such polymer polyol systems and methods for their preparation are disclosed in, for instance, EP-A-076,491, EP-A-343,907 and EP-A-495,551. Polyurea or polyurethane polymers are also known to be useful as the dispersed polymer in polymer polyols instead of the polymers based on ethylenically unsaturated monomers.

The polymer dispersed in the base polyol, may in principle be any such polymer known to be applicable for this purpose. Thus, suitable polymers include the polymers based on ethylenically unsaturated monomers and particularly polymers of vinyl aromatic hydrocarbons, like styrene, alpha-methyl styrene, methyl styrene and various other alkyl-substituted styrenes. Of these, the use of styrene is preferred. The vinyl aromatic monomer may be used alone or in combination with other ethylenically unsaturated monomers, such as acrylonitrile, methacrylonitrile, vinylidene chloride, various acrylates and conjugated dienes like 1,3-butadiene and isoprene. Preferred polymers, however, are polystyrene and styrene-acrylonitrile (SAN) copolymers. Another suitable class of polymers are the polyurea and polyurethane polymers. Particularly the condensation products of primary amines or polyhydric alcohol amines and aromatic diisocyanates are very useful in this respect. One suitable polymer is the condensation product of triethanolamine and toluene diisocyanate (TDI) .

The dispersed polymer is suitably present in the first polyol in an amount of from 10 to 55% by weight based on total weight of the first polyol, in particular 15 to 55 % by weight, such as 30 to 45 % by weight of the first polyol.

One polyol suitable for use as the first polyol, with a polymer dispersed therein, is the commercially available CARADOL SP 30-45 (CARADOL is a trade mark).

The second polyol has a number average molecular weight in the range of from 300 to 1500 Daltons, and a functionality in the range of from 2 to 6 and a hydroxyl value in the range of from 100 to 600 mg KOH/g.

In an embodiment the second polyol has a number average molecular weight in the range of from 300 to 1100 Daltons, in particular in the range of from 300 to 900 Daltons. Suitably, the second polyol may have a number average molecular weight in the range of from 500 to 800 Daltons.

In an embodiment the second polyol has a functionality in the range of from 2 to 5, in particular in the range of from 2.5 to 4. Suitably, the second polyol may have a functionality in the range of from 2.5 to 3.5.

In an embodiment, the second polyol has a hydroxyl value of at least 120 mg KOH/g, in particular in the range of from 150 to 500 mg KOH/g. Suitably, the second polyol may have a hydroxyl value in the range of from 150 to 300 mg KOH/g.

The second polyol may advantageously be propylene oxide (PO)- and optionally ethylene oxide (EO)- derived, i.e. comprise PO and/or EO derived oxyalkene moieties.

In an embodiment, the second polyol comprises only PO moieties (in combination with a hydroxyl containing starting compound).

Where EO moieties are present in the polyol they may advantageously be randomly co-polymerised with PO moieties. In an embodiment, the second polyol optionally contains EO moieties (i.e. if any) in an amount of at most 10% w/w, at most 5% w/w, at most 2% w/w, or at most 1% w/w. The amount of EO moieties in % w/w is based on the total of oxyalkylene units present and may be measured according to ASTM D4875.

The polyol may advantageously comprise a balance of PO moieties making up the remainder of the polyol.

In an embodiment, the second polyol comprises primary hydroxyl groups. In an embodiment, the second polyol has a percentage of primary hydroxyl groups in the range of from 1 to 100, in particular in the range of from 5 to 90.

One polyol suitable for use as the second polyol is the commercially available CARADOL SA 250-06 (CARADOL is a trade mark).

In some embodiments, the polyol component is the sole polyol component used in the invention. However, in other embodiments, the invention may comprise using one or more auxiliary polyols as additional components forming part of the foam-forming reactants. Advantageously such auxiliary polyols may be entirely absent, or present in an amount of at most 50 pphp, in particular at most 10 pphp.

The amine catalyst component (b) used in aspects of the invention consists of one or more tertiary amines or delayed action forms thereof.

In particular, the amine catalyst component consists of:
(i) in the range of from 0.23 to 0.6 parts per hundred parts by weight of polyol component (pphp) of triethylenediamine or a delayed action form thereof, and optionally in the range of from 0.05 to 0.20 pphp bis(dimethylaminoethyl)ether or a delayed action form thereof; or
(ii) an amount of one or more of the above-mentioned other tertiary amines or delayed action forms thereof having a catalytic gelling and/or blowing activity equivalent to a combination of in the range of from 0.2 to 0.6 pphp of triethylenediamine or a delayed action form thereof, and optionally in the range of from 0.05 to 0.20 pphp bis(dimethylaminoethyl)ether or a delayed action form thereof.

In an embodiment, the amount of triethylenediamine and/or delayed action form of triethylenediamine is at most 0.5 pphp, in particular at most 0.4 pphp or even at most 0.3 pphp.

Triethylenediamine is 1,4-diazabicyclo[2.2.2]octane, which is a known polyurethane catalyst also referred to as TEDA. An example of a catalyst formulation comprising triethylenediamine is Dabco (TM) 33LV (33% wt triethylene diamine in dipropylene glycol, available from Air Products and Chemicals).

For the avoidance of doubt, catalytically inert carriers, such as for example dipropylene glycol, are not considered to be part of the amine catalyst component but may be present in the process or reaction system as additional components.

In an embodiment, the amine catalyst component comprises or consists of a delayed action form of triethylenediamine. Such delayed action forms are known in the art. The delayed action form of triethylenediamine may suitably be a salt of triethylenediamine.

A delayed action form of triethylenediamine may, for example, be obtained by reacting triethylenediamine with a carboxylic acid. The resulting product is composed of a carboxylic acid salt and an excess of triethylenediamine. The salt has limited or no catalytic activity. When this blend is used in a foam formulation, only the free amine is catalytically active. When the reaction has progressed, with heat generation, the salt dissociates to yield back triethylenediamine and the acid. At this time the catalyst is unblocked and has achieves its full activity.

Examples of suitable carboxylic acids for preparing delayed action forms of triethylenediamine include formic and 2-ethylhexanoic acids.

The unblocking temperature depends on the acid used. Stronger acids require higher temperatures than weaker acids. Suitably, the unblocking temperature may be in the range of from 30 to 60 °C.

An example of a catalyst formulation comprising delayed action triethylenediamine is Niax (TM) A-300, a proprietary mixture of acid blocked triethylenediamine in water, available from Momentive Performance Materials.

In an embodiment, (i) comprises an amount of bis(dimethylaminoethyl)ether and/or delayed action form of bis(dimethylaminoethyl)ether. Suitably, the amount of bis(dimethylaminoethyl)ether and/or delayed action form of bis(dimethylaminoethyl)ether in (i) may be at least 0.08 pphp, in particular at least 0.10 pphp, such as at least 0.11 pphp.

In an embodiment, the amount of bis(dimethylaminoethyl)ether and/or delayed action form of bis(dimethylaminoethyl)ether is at most 0.16. in particular at most 0.14 pphp, such as at most 0.13 pphp.

An example of a catalyst formulation comprising bis(dimethylaminoethyl)ether is Niax (RTM) A1, a 70 w/w% solution of bis(dimethylaminoethyl)ether in dipropylene glycol, commercially available from Momentive.

As aforesaid, catalytically inert carriers, such as for example dipropylene glycol, are not considered to be part of the amine catalyst component but may be present in the process or reaction system as additional components.

In an embodiment, (i) comprises a delayed action form of bis(dimethylaminoethyl)ether. Such delayed action forms are known in the art. The delayed action form of bis(dimethylaminoethyl)ether may suitably be a salt of bis(dimethylaminoethyl)ether.

A delayed action form of bis(dimethylaminoethyl)ether may, for example, be obtained by reacting bis(dimethylaminoethyl)ether with a carboxylic acid. The resulting product is composed of a carboxylic acid salt and an excess of bis(dimethylaminoethyl)ether. The salt has limited or no catalytic activity. When this blend is used in a foam formulation, only the free amine is catalytically active. When the reaction has progressed, with heat generation, the salt dissociates to yield back bis(dimethylaminoethyl)ether and the acid. At this time the catalyst is unblocked and has achieves its full activity.

Examples of suitable carboxylic acids for preparing delayed action forms of bis(dimethylaminoethyl)ether include formic and 2-ethylhexanoic acids.

The unblocking temperature depends on the acid used. Stronger acids require higher temperatures than weaker acids. Suitably, the unblocking temperature may be in the range of from 30 to 60 °C.

An example of a catalyst formulation comprising delayed action bis(dimethylaminoethyl)ether is Niax (TM) A-400, a proprietary mixture of acid blocked bis(dimethylaminoethyl)ether in water, available from Momentive Performance Materials.

In an embodiment, the amine catalyst component consists of an amount of one or more tertiary amines or delayed action forms thereof having a catalytic gelling and/or blowing activity equivalent to a combination of in the range of from 0.2 to 0.6 pphp of triethylenediamine or a delayed action form thereof, and optionally in the range of from 0.05 to 0.20 pphp bis(dimethylaminoethyl)ether or a delayed action form thereof.

As aforesaid, the catalytic gelling and/or blowing activity of a tertiary amine may be readily determined based on the method disclosed in "Polyurethane Catalysis by Tertiary Amines", Roger van Maris et al, Journal of Cellular Plastics, Volume 41 - July 2005 , 305.

In an embodiment, the amine catalyst component comprises one or more other tertiary amine catalysts with gelling activity, namely one or more tertiary amines selected from N,N,N',N'-tetramethyl hexamethylenediamine; N,N-dimethyl cyclohexylamine; N-(2-dimethylaminoethyl)-N'-methylpiperanize; N,N,N',N'-tetramethylethylene diamine; N,N,N',N',N"-pentamethyldiethylene triamine; Bis(2-dimethylaminoethyl) ether; N,N-dimethylaminoethoxyethanol; N,N-dimethylaminoethanol; and N,N,N'-trimethylaminoethyl ethanolamine.

For example, in an embodiment, the amine catalyst component comprises N,N-dimethylaminoethanol. In an embodiment, the amine catalyst component consists of in the range of from 0.75 to 2.25 parts per hundred parts by weight of polyol component (pphp) of N,N-dimethylaminoethanol or a delayed action form thereof, and optionally in the range of from 0.05 to 0.20 pphp bis(dimethylaminoethyl)ether or a delayed action form thereof.

As is known in the art, the foam-forming reactants will typically comprise the aromatic polyisocyanate and at least a blowing agent.

The aromatic polyisocyanate may for example comprise tolylene diisocyanate (TDI), diphenylmethane diisocyanate (MDI) or polymethylene polyphenyl isocyanate.

One or more aliphatic polyisocyanates, such as for example hexamethylene diisocyanate, xylylene diisocyanate, dicyclohexylmethane diisocyanate, lysine diisocyanate or tetramethylxylylene diisocyanate, an alicyclic polyisocyanate such as isophorone diisocyanate, or a modified product thereof may also be present.

In an embodiment, the aromatic polyisocyanate comprises or consists of a mixture of 80 % w/w of 2,4-tolylene diisocyanate and 20 % w/w of 2,6-tolylene diisocyanate, which mixture is known as "TDI-80".

In the aspects of the present invention, the molar ratio of isocyanate (NCO) groups in the polyisocyanate to hydroxyl (OH) groups in the polyether polyol and any water may suitably be at most 1/1, which corresponds to a TDI index of 100. In an embodiment, the TDI index is at most 90. Optionally, the TDI idex may be at most 85.

The TDI index may suitable be at least 70, in particular at least 75.

The foam-forming reactants may comprise an amount of aromatic polyisocyanate for providing the TDI index. In an embodiment the aromatic polyisocyanate is the sole isocyanate in the foam-forming reactants.

The blowing agent used to prepare the polyurethane foam of the present invention may advantageously comprise water. The use of water as a (chemical) blowing agent is well known. Water reacts with isocyanate groups according to the well-known NCO/H₂O reaction, thereby releasing carbon dioxide which causes the blowing to occur.

However, other suitable blowing agents, such as for example, acetone, gaseous or liquid carbon dioxide, halogenated hydrocarbons, aliphatic alkanes and alicyclic alkanes may be employed additionally or alternatively.

Due to the ozone depleting effect of fully chlorinated, fluorinated alkanes (CFC's) the use of this type of blowing agent is generally not preferred, although it is possible to use them within the scope of the present invention. Halogenated alkanes, wherein at least one hydrogen atom has not been substituted by a halogen atom (the so-called HCFC's) have no or hardly any ozone depleting effect and therefore are the preferred halogenated hydrocarbons to be used in physically blown foams. One suitable HCFC type blowing agent is 1-chloro-1,1-difluoroethane.

It will be understood that the above blowing agents may be used singly or in mixtures of two or more. The amounts in which the blowing agents are to be used are those conventionally applied, i.e.: in the range of from 0.1 to 10 per hundred parts by weight of polyol component (pphp), in particular in the range of from 0.1 to 5 pphp, more in particular in the range of from 0.5 to 3 pphp in case of water; and between about 0.1 and 50 pphp in particular in the range of from 0.1 to 20 pphp, more in particular in the range of from 0.5 to 10 pphp in case of halogenated hydrocarbons, aliphatic alkanes and alicyclic alkanes.

Additionally, other components may also be present during the polyurethane preparation process of the present invention, such as surfactants and/or cross-linking agents.

The use of foam stabilisers (surfactants) is well known. Organosilicone surfactants are most conventionally applied as foam stabilisers in polyurethane production. A large variety of such organosilicone surfactants is commercially available. Usually, such foam stabiliser is used in an amount of from 0.01 to 5.0 parts by weight per hundred parts by weight of polyol component (pphp). Preferred amounts of stabiliser are from 0.25 to 1.0 pphp.

The use of cross-linking agents in the production of polyurethane foams is also well known. Polyfunctional glycol amines are known to be useful for this purpose. The polyfunctional glycol amine which is most frequently used and is also useful in the preparation of the present flexible polyurethane foams, is diethanol amine, often abbreviated as DEOA. If used at all, the cross-linking agent is applied in amounts up to 2 parts by weight per hundred parts by weight of polyol component (pphp), but amounts in the range of from 0.01 to 0.5 pphp are most suitably applied.

In addition, other well-known auxiliaries, such as fillers and flame retardants may also form part of the foam-forming reactants.

Suitably, flame retardant may be present in a "flame retardant effective amount", i.e. an amount of total flame retardant sufficient to impart flame resistance to the polyurethane foam sufficient to pass a flame resistance standard, e.g. BS 5852, Part 2, Crib 5 or Cal 117 Section A - Part 1.

The total amount of flame retardant may suitably be in the range of from 10 to hundred parts by weight per hundred parts by weight of polyol component (pphp), in particular between about 20 and about 80 pphp.

In an embodiment, melamine or a melamine derivative is used as a principal flame retardant. Suitably, melamine may be employed together with a supplemental flame retardant, e.g. a halogenated phosphate.

The melamine useful in the present invention is suitably employed in an amount of between about 5 and about 50 parts by weight per hundred parts by weight of polyol component (pphp), preferably between about 20 and about 50 pphp in the urethane-forming reaction mixture.

The melamine and/or its derivatives can be used in any form, as may be desired, including solid or liquid form, ground (e.g., ball-milled) or unground, as may be desired for any particular application.

The supplemental flame retardant, such as halogenated phosphate, may suitably be employed in an amount of between about 10 and about 30 pphp, preferably between about 15 and about 25 pphp. An example of a suitable halogenated phosphate flame retardant is tris-mono-chloro-propyl-phosphate (TMCP), commercially available, for example, under the name Antiblaze (RTM).

In some embodiments, the foam-forming reactants comprise one or more additional components consistent with forming a foam, suitably a viscoelastic foam. One example of an additional component is a catalytically inert carrier material in which the catalyst is dispersed. However any suitable further component may in principle be added, provided that the desired formation of the foam is not affected.

Suitably, the amount of any additional components may be no greater than 100 pphp, for example, no greater than 50 pphp, in particular no greater than 20 pphp or no greater than 10 pphp.

In some embodiments, the foam-forming reactants consist of the aromatic polyisocyanate, blowing agent and optionally surfactant, crosslinker and flame retardant.

The reaction system may consist of the polyol component (a), the amine catalyst component (b) the foam-forming reactants (c). The process of the invention may thus involve combining only the polyol component (a), the amine catalyst component (b) and the foam-forming reactants (c) to obtain the polyurethane foam.

In general, the process or use of the invention may involve combining the polyol component (a), the amine catalyst component (b) and the foam-forming reactants (c) in any suitable manner to obtain the polyurethane foam.

In an embodiment, the process comprises stirring the polyol component (a), the amine catalyst component (b) and the foam-forming reactants (c) except the polyisocyanate together for a period of at least 1 minute; and adding the polyisocyanate under stirring.

In an embodiment, the full rise time (FRT, measured as the time from start of aromatic isocyanate addition/mixing to end of foam rise) is no greater than 360 seconds, in particular no greater than 250 seconds, such as no greater than 240 seconds.

In an embodiment, the process comprises forming the foam into a shaped article before it fully sets. Suitably, forming the foam may comprise pouring the polyol component (a), the amine catalyst component (b) and the foam-forming reactants (c) into a mould before gelling is complete.

The foam formed or obtainable by the process, reaction system or use of the invention may advantageously be a viscoelastic foam.

In an embodiment, the foam has a density in the range of from 25 to 500, in particular in the range of from 25 to 150.

In an embodiment, the foam has a porosity (measured according to ASTM D3574- Test G) in the range of from 2 to 200 litres per minute, in particular 10 to 150 litres per minute, such as in the range of from 40 to 80 litres per minute.

In an embodiment, the foam has a compression load deflection (CLD, measured according to DIN 53577/ISO 3386) in the range of from 0.5 to 20 kPa, in particular 1 to 10 kPa, such as in the range of from 2 to 5 kPa.

In an embodiment, the foam has a resiliency (measured according to ASTM D3574 - Test H) in the range of from 1 to 40 %, in particular 2 to 25%, such as in the range of from 5 to 15%.

In an embodiment, the foam has a recovery time to 4.5s (s) (measured according to ASTM D3574-Test M) in the range of from 1 to 40, in particular 2 to 30, such as in the range of from 5 to 25.

In an embodiment, the foam is a flame resistant foam passing a flame resistance standard, e.g. BS 5852, Part 2, Crib 5 or Cal 117 Section A - Part 1.

Throughout the description and claims of this specification, the words "comprise" and "contain" and variations of the words, for example "comprising" and "comprises", mean "including but not limited to", and do not exclude other moieties, additives, components, integers or steps. Moreover the singular encompasses the plural unless the context otherwise requires: in particular, where the indefinite article is used, the specification is to be understood as contemplating plurality as well as singularity, unless the context requires otherwise.

Preferred features of each aspect of the invention may be as described in connection with any of the other aspects. Other features of the invention will become apparent from the following examples. Generally speaking the invention extends to any novel one, or any novel combination, of the features disclosed in this specification (including any accompanying claims and drawings). Thus features, integers, characteristics, compounds, chemical moieties or groups described in conjunction with a particular aspect, embodiment or example of the invention are to be understood to be applicable to any other aspect, embodiment or example described herein unless incompatible therewith. Moreover unless stated otherwise, any feature disclosed herein may be replaced by an alternative feature serving the same or a similar purpose.

Where upper and lower limits are quoted for a property then a range of values defined by a combination of any of the upper limits with any of the lower limits may also be implied.

In this specification, references to component properties are - unless stated otherwise - to properties measured under ambient conditions, ie at atmospheric pressure and at a temperature of about 23°C.

The present invention will now be further described with reference to the following non-limiting examples.

### Comparative Examples 1 to 2 and Examples 3 to 7

Seven polyurethane foams were prepared based upon the following starting materials:
- Polyol A is a poly(propyleneoxide)triol, i.e. an entirely PO-based polyol with a nominal functionality of 3.0, having a number average molecular weight of about 700 Dalton and a hydroxyl value of 250 mg KOH/g.
- Polyol B is a polymer polyol consisting of a random PO/EO base polyol (EO content about 10% w/w) with a number average molecular weight of about 3000 Dalton, a nominal functionality of 3.0, a hydroxyl value of 30 mg KOH/g of polyol with a solid content of 45 w/w% of styrene-acrylonitrile polymer stably dispersed therein.

- Polyol C is a (propyleneoxide)triol, i.e. an entirely PO-based polyol with a nominal functionality of 3.0, having a number average molecular weight of about 1000 Dalton and a hydroxyl value of 160 mg KOH/g.
- Catalyst A is a 70 w/w% solution of bis(dimethylaminoethyl)ether in dipropyleneglycol, commercially available from Momentive under the trade name Niax (RTM) A1.
- Catalyst B is a 33 w/w% solution of triethylene diamine in dipropyleneglycol, commercially available from Air Products and Chemicals under the trade name Dabco (RTM) 33LV.
- Catalyst C is a delayed action amine catalyst containing water, understood to be a proprietary mixture of acid blocked bis(dimethylaminoethyl)ether and bis(dimethylaminoethyl)ether in water with activity comparable to Catalyst A, available from Momentive Performance Materials under the trade name Niax (RTM) A400.
- Catalyst D is a delayed action amine catalyst containing water, understood to be a proprietary mixture of acid blocked triethylenediamine and triethylenediamine in water with activity comparable to Catalyst B, available from Momentive Performance Materials under the trade name Niax® A300.
- Surfactant A is an organosilicone surfactant, commercially available from Momentive under the trade name Niax (RTM) L620.
- Surfactant B is an organosilicone surfactant, commercially available from Evonik Industries under the trade name Tegostab (RTM) B8002.
- Surfactant C is an organosilicone surfactant, commercially available from Evonik Industries under the trade name Tegostab (RTM) B8155.
- Surfactant D is an organosilicone surfactant, commercially available from Momentive under the trade name Niax (RTM) L650.
- TCMP is tris (2-chloroisopropyl) phosphate with a chlorine content of 33 w/w% and phosphorous content of 9.5 w/w%.
- TDI 80 is an 80/20 w/w blend of the 2,4- and 2,4-isomers of toluene diisocyanate.

To prepare each of the foams, a 1:1 mixture of polyols A and B was processed into polyurethane foam under a range of conditions, using the formulations shown in Table 1. All quantities are in parts by weight.

Melamine was premixed with polyol A and TMPC and stirred for 1 minute. Polyol B was added and stirred for 1 minute. Water, diethanolamine, catalyst and surfactant were then added and the mixture stirred for 75 seconds. TDI 80 was added and the mixture stirred for 10 to 15 seconds and then poured into the foaming box. The resulting foam was cured for 24 hours, before cutting and conditioning at 23°C +/- 2 °C for a minimum of 18 hours.

In Examples 8 and 9, the second polyol is formed of a mixture of polyol A and polyol C.

**Table 1**

| **Component** | | **Formulation** | | | | | | | | |
|---|---|---|---|---|---|---|---|---|---|---|
| | | **1(*)** | **2(*)** | **3** | **4** | **5** | **6** | **7** | **8(*)** | **9(*)** |
| Polyol A | pbw | 50 | 50 | 50 | 50 | 50 | 50 | 50 | 30 | 30 |
| Polyol B | pbw | 50 | 50 | 50 | 50 | 50 | 50 | 50 | 40 | 40 |
| Polyol C | pbw | 0 | 0 | 0 | 0 | 0 | 0 | 0 | 30 | 30 |
| Water | pphp | 1.5 | 1.5 | 1.5 | 1.5 | 2 | 2 | 2 | 2 | 2 |
| DEOA | pphp | 0.08 | 0.12 | 0.08 | 0.08 | 0.06 | 0.06 | 0.06 | 0.06 | 0.06 |
| Catalyst A | pphp | 0.18 | 0.18 | 0.2 | 0.2 | 0 | 0 | 0 | 0 | 0 |
| Catalyst B | pphp | 0.36 | 0.36 | 0 | 0.9 | 0.72 | 0.72 | 0.72 | 0.65 | 0.65 |
| Catalyst C | pphp | 0 | 0 | 0 | 0 | 0.18 | 0.18 | 0.18 | 0.16 | 0.16 |
| Catalyst D | pphp | 0 | 0 | 0.9 | 0 | 0 | 0 | 0 | 0 | 0 |
| Surfactant A | pphp | 0.3 | 0.3 | 0.2 | 0.2 | 0 | 0 | 0 | 0 | 0 |
| Surfactant B | pphp | 0 | 0 | 0 | 0 | 0 | 0 | 0.1 | 0 | 0 |
| Surfactant C | pphp | 0 | 0 | 0 | 0 | 0 | 0.28 | 0 | 0 | 0 |
| Surfactant D | pphp | 0 | 0 | 0 | 0 | 0.28 | 0 | 0.25 | 1.0 | 1.25 |
| Melamine | pphp | 40 | 40 | 40 | 40 | 40 | 40 | 40 | 40 | 40 |
| TMCP | pphp | 20 | 20 | 20 | 20 | 20 | 20 | 20 | 20 | 20 |
| TDI 80 | Index | 88 | 88 | 88 | 88 | 88 | 88 | 88 | 88 | 88 |

| | | | | | | | | | | |
|---|---|---|---|---|---|---|---|---|---|---|
| DEOA = diethanolamine pbw = parts by weight pphp = parts per hundred of polyol Each of the resulting foams was analysed and subject to testing to determine the range of properties as shown in Table 2. (*) = not according to the invention | | | | | | | | | | |

The full rise time was determined by timing how long it took for the foam to reach maximum height/volume during the foaming reaction.

Foam density was calculated by measuring the weight of a 10 cm X 10 cm X 5 cm cube of foam.

Porosity was determined using IDM foam porosity tester using ASTM D3574 - Test G, in which 50 mm x 50 mm x 25 mm foam sample is placed in a vacuum chamber cavity and a specified automatic constant differential air pressure (125Pa) is applied. The readings of air volume are recorded in litres/min.

Compression load deflection (CLD) was determined by measuring the force required to compress a 10 cm X 10 cm X 5 cm cube of foam by 40 % using DIN 53577/ISO 3386 test method.

Resiliency was determined by dropping a 16 mm diameter steel ball bearing onto a 10 cm X 10 cm X 5 cm cube of foam and measuring the percentage height that the ball bearing rebounded ASTM D3574 - Test H.

Recovery time was determined using ASTM D3574 - Test M with foam samples of dimensions 10 cm X 10 cm X 5 cm, smaller than that mentioned in the test method.

Flame resistant was determined by the BS 5852, Part 2, Crib 5 test. In general, a sample passed the test if the loss in foam weight (due to burning) was not more than 60 g and the time for self-extinguish (when the smoking/smoldering stops) was not be more than 10 min.

**Table 2**

| | **Foam** | | | | | | | | |
|---|---|---|---|---|---|---|---|---|---|
| | **1(*)** | **2(*)** | **3** | **4** | **5** | **6** | **7** | **8(*)** | **9(*)** |
| Full Rise Time (s) | 404 | 390 | 226 | 215 | 178 | 186 | 157 | 220 | 227 |
| Density (Kg/m3) | 62 | 69 | 58 | 69 | 52 | 51 | 52 | 50.6 | 51.6 |
| Porosity (litre/min) | 58 | 46 | 69 | 21 | 50 | 60 | 43 | 26 | 23 |
| CLD @40% (kPa) | 0 | 0 | 3.0 | 2.9 | 2.5 | 2.3 | 2.9 | 4.1 | 4.4 |
| Resiliency (%) | 0 | 0 | 9 | 8 | 9 | 9 | 9 | 12 | 11 |
| Recovery Time to 4.5s (s) | 0 | 0 | 8 | 13 | 17 | 16 | 19 | 9 | 9 |
| Crib-5 test | Fail | Fail | Fail | Pass | Pass | Pass | Pass | Pass | Pass |

| | | | | | | | | | |
|---|---|---|---|---|---|---|---|---|---|
| **(*)** = not according to the invention | | | | | | | | | |

Notably, the foams of comparative Examples 1 and 2 had a rise time in excess of 350 seconds, whereas the foams of Examples 3 to 9 had a rise time of less than 250 seconds.

The foams of Examples 4 to 9 further had desirable fire resistance properties in addition to viscoelastic foam properties.

### Example 10 (Prophetic)

An amine catalyst component comprising N,N-dimethylaminoethanol instead of triethylenediamine, with the N,N-dimethylaminoethanol providing a gelling activity equivalent to 0.2 to 0.6 parts per hundred parts by weight of polyol component (pphp) of triethylenediamine was determined.

With reference to "Polyurethane Catalysis by Tertiary Amines", Roger van Maris et al, Journal of Cellular Plastics, Volume 41 - July 2005 , 305, in particular Table 1 thereof, the gelling activity of triethylenediamine was found to be 10.9 (x10), whereas the gelling activity of N,N-dimethylaminoethanol was found to be 2.91 (x10). On this basis, the amount of N,N-dimethylaminoethanol providing a gelling activity equivalent to 0.2 to 0.6 parts per hundred parts by weight of polyol component (pphp) of triethylenediamine was calculated to be 0.75 to 2.25 pphp.

Accordingly, it is envisaged that one suitable amine catalyst component could consist of in the range of from 0.75 to 2.25 pphp dimethylaminoethanol or a delayed action form thereof, optionally in combination with in the range of from 0.05 to 0.20 pphp bis(dimethylaminoethyl)ether or a delayed action form thereof.

Particular embodiments of such a component equivalent to embodiments comprising triethylenediamine, e.g. as described hereinabove, may be readily inferred by calculation and are also envisaged.

## Claims

1. A process for making a polyurethane foam, the process comprising combining, at an isocyanate index of at most 120:
(a) a polyol component comprising, per hundred parts by weight: (i) from 10 to 70 parts by weight of a first polyol having a number average molecular weight in the range of from 2000 to 12000 Dalton, and a functionality in the range of from 2 to 6; and (ii) from 90 to 30 parts by weight of a second polyol having a number average molecular weight in the range of from 300 to 1500 Dalton, a functionality in the range of from 2 to 6, and a hydroxyl value in the range of from 100 to 600 mg KOH/g;
(b) an amine catalyst component consisting of:
(i) in the range of from 0.23 to 0.6 parts per hundred parts by weight of polyol component (pphp) of triethylenediamine or a delayed action form thereof, and optionally in the range of from 0.05 to 0.20 pphp bis(dimethylaminoethyl)ether or a delayed action form thereof; or
(ii) an amount of one or more tertiary amines, selected from N,N,N',N'-tetramethyl hexamethylenediamine; N,N-dimethyl cyclohexylamine; N-(2-dimethylaminoethyl)-N'-methylpiperanize; N,N,N',N'-tetramethylethylene diamine; N,N,N',N',N"-pentamethyldiethylene triamine; Bis(2-dimethylaminoethyl) ether; N,N-dimethylaminoethoxyethanol; N,N-dimethylaminoethanol; and N,N,N'-trimethylaminoethyl ethanolamine, or delayed action forms thereof having a catalytic gelling and/or blowing activity, as determined according to the description, equivalent to a combination of in the range of from 0.2 to 0.6 pphp of triethylenediamine or a delayed action form thereof, and optionally in the range of from 0.05 to 0.20 pphp bis(dimethylaminoethyl)ether or a delayed action form thereof; and
(c) foam-forming reactants comprising an aromatic polyisocyanate,
to obtain the polyurethane foam.

2. The process of any preceding claim, wherein the amount of triethylenediamine and/or delayed action form of triethylenediamine in (i) is at most 0.4 pphp.

3. The process of any preceding claim, wherein the amount of bis(dimethylaminoethyl)ether and/or delayed action form of bis(dimethylaminoethyl)ether in (i) is at least 0.10 pphp.

4. The process of any preceding claim, wherein the amount of bis(dimethylaminoethyl)ether and/or delayed action form of bis(dimethylaminoethyl)ether in (i) is at most 0.14 pphp.

5. The process of any preceding claim, wherein the amine catalyst component consists of in the range of from 0.75 to 2.25 parts per hundred parts by weight of polyol component (pphp) of N,N-dimethylaminoethanol or a delayed action form thereof, and optionally in the range of from 0.05 to 0.20 pphp bis(dimethylaminoethyl)ether or a delayed action form thereof.

6. The process of any preceding claim, wherein the full rise time, as measured according to the description, is no greater than 250 seconds.

7. The process of any preceding claim, wherein the first polyol is a polymer polyol having a solid polymer stably dispersed therein.

8. The process of any preceding claim, wherein the polyol component comprises, per hundred parts by weight: (i) from 30 to 70 parts by weight of said first polyol having a number average molecular weight in the range of from 2500 to 4000 Dalton, and a functionality in the range of from 2.5 to 4; and (ii) from 70 to 30 parts by weight of said second polyol having a number average molecular weight in the range of from 300 to 1100 Dalton, a functionality in the range of from 2.5 to 4, and a hydroxyl value in the range of from 150 to 300 mg KOH/g.

9. A foam obtainable by the process of any preceding claim.

10. The foam or process of any preceding claim, wherein the foam is a viscoelastic foam.

11. The foam or process of any preceding claim, wherein the foam has a resiliency, measured according to ASTM D3574 - Test H, in the range of from 5 to 15%.

12. The foam or process of any preceding claim, wherein the foam has a recovery time to 4.5s (s), measured according to ASTM D3574-Test M, in the range of from 5 to 25.

13. Use of an amine catalyst component consisting of:
(i) a combination of in the range of from 0.23 to 0.6 parts per hundred parts by weight of polyol component (pphp) of triethylenediamine or a delayed action form thereof, and optionally in the range of from 0.05 to 0.20 pphp bis(dimethylaminoethyl)ether or a delayed action form thereof; or
(ii) an amount of one or more tertiary amines, selected from N,N,N',N'-tetramethyl hexamethylenediamine; N,N-dimethyl cyclohexylamine; N-(2-dimethylaminoethyl)-N'-methylpiperanize; N,N,N',N'-tetramethylethylene diamine; N,N,N',N',N"-pentamethyldiethylene triamine; Bis(2-dimethylaminoethyl) ether; N,N-dimethylaminoethoxyethanol; N,N-dimethylaminoethanol; and N,N,N'-trimethylaminoethyl ethanolamine, or delayed action forms thereof having a catalytic gelling and/or blowing activity, as determined according to the description, equivalent to a combination of in the range of from 0.2 to 0.6 pphp of triethylenediamine or a delayed action form thereof, and optionally in the range of from 0.05 to 0.20 pphp bis(dimethylaminoethyl)ether or a delayed action form thereof;
(iii) in a process of making a polyurethane foam, the process comprising combining, at an isocyanate index of at most 120:
(a) a polyol component comprising, per hundred parts by weight: (i) from 10 to 70 parts by weight of a first polyol having a number average molecular weight in the range of from 2000 to 12000 Dalton, and a functionality in the range of from 2 to 6; and (ii) from 90 to 30 parts by weight of a second polyol having a number average molecular weight in the range of from 300 to 1500 Dalton, a functionality in the range of from 2 to 6, and a hydroxyl value in the range of from 100 to 600 mg KOH/g;
(b) said amine catalyst component; and
(c) foam-forming reactants comprising an aromatic polyisocyanate,
(d) to obtain the polyurethane foam,
(e) for the purpose of counteracting the formation of aromatic diamine in the polyurethane foam and/or reducing full rise time.

## Patentansprüche

1. Verfahren zum Herstellen eines Polyurethanschaums, wobei das Verfahren das Kombinieren von Folgendem bei einem Isocyanatindex von höchstens 120 umfasst:
(a) einer Polyolkomponente, umfassend pro hundert Gewichtsteile:
i). 10 bis 70 Gewichtsteile eines ersten Polyols, das einen numerischen Molekulargewicht-Durchschnitt im Bereich von 2000 bis 12000 Dalton und eine Funktionalität im Bereich von 2 bis 6 aufweist; und
ii). 90 bis 30 Gewichtsteile eines zweiten Polyols, das einen numerischen Molekulargewicht-Durchschnitt im Bereich von 300 bis 1500 Dalton, eine Funktionalität im Bereich von 2 bis 6 und eine Hydroxylmenge im Bereich von 100 bis 600 mg KOH/g aufweist;
(b) eine Aminkatalysatorkomponente bestehend aus:
i). einer Polyolkomponente (pphp) von Triethylendiamin oder einer Form mit verzögerter Wirkung davon im Bereich von 0,23 bis 0,6 Gewichtsteilen pro 100 Gewichtsteile und wahlweise Bis(dimethylaminoethyl)ether oder einer Form mit verzögerter Wirkung davon im Bereich von 0,05 bis 0,20 pphp; oder
ii). einer Menge eines oder mehrerer tertiärer Amine, ausgewählt aus N,N,N',N'-Tetramethylhexamethylendiamin; N,N-Dimethylcyclohexylamin; N-(2-Dimethylaminoethyl)-N'-Methylpiperazin; N,N,N' ,N'-Tetramethylethylendiamin; N,N,N',N',N"-Pentamethyldiethylentriamin, Bis(2-dimethylaminoethyl)ether, N,N-Dimethylaminoethoxyethanol, N,N-Dimethylaminoethanol und N,N,N'-Trimethylaminoethylethanolamin oder Formen mit verzögerter Wirkung davon, die eine beschreibungsgemäße katalytische Gelier- und/oder Blasaktivität aufweisen, die äquivalent sind zu einer Kombination von Triethylendiamin oder einer Form mit verzögerter Wirkung davon im Bereich von 0,2 bis 0,6 pphp und wahlweise Bis(dimethylaminoethyl)ether oder eine Form mit verzögerter Wirkung davon im Bereich von 0,05 bis 0,20 pphp; und
(c) schaumbildende Reaktanten, die einen Aromaten umfassen
Polyisocyanat, um den Polyurethanschaum zu erhalten.

2. Verfahren nach einem der vorhergehenden Ansprüche, wobei die Menge an Triethylendiamin und/oder einer Form mit verzögerter Wirkung von Triethylendiamin in (i) höchstens 0,4 pphp beträgt.

3. Verfahren nach einem der vorhergehenden Ansprüche, wobei die Menge an Bis(dimethylaminoethyl)ether und/oder einer Form mit verzögerter Wirkung von Bis(dimethylaminoethyl)ether in (i) mindestens 0,10 pphp beträgt.

4. Verfahren nach einem der vorhergehenden Ansprüche, wobei die Menge an Bis(dimethylaminoethyl)ether und/oder einer Form mit verzögerter Wirkung von Bis(dimethylaminoethyl)ether in (i) höchstens 0,14 pphp beträgt.

5. Verfahren nach einem der vorhergehenden Ansprüche, wobei die Aminkatalysatorkomponente aus einer Polyolkomponente (pphp) von N,N-Dimethylaminoethanol oder einer Form mit verzögerter Wirkung davon im Bereich von 0,75 bis 2,25 Gewichtsteilen pro 100 Gewichtsteile und wahlweise Bis(dimethylaminoethyl)ether oder einer Form mit verzögerter Wirkung davon im Bereich von 0,05 bis 0,20 pphp besteht.

6. Verfahren nach einem der vorhergehenden Ansprüche, wobei die volle Anstiegszeit, gemessen gemäß der Beschreibung, nicht mehr als 250 Sekunden beträgt.

7. Verfahren nach einem der vorhergehenden Ansprüche, wobei das erste Polyol ein Polymerpolyol ist, das ein darin stabil dispergiertes festes Polymer aufweist.

8. Verfahren nach einem der vorhergehenden Ansprüche, wobei die Polyolkomponente pro hundert Gewichtsteile Folgendes umfasst:
i). 30 bis 70 Gewichtsteile eines ersten Polyols, das einen numerischen Molekulargewichtsdurchschnitt im Bereich von 2500 bis 4000 Dalton und eine Funktionalität im Bereich von 2,5 bis 4 aufweist; und
ii). 70 bis 30 Gewichtsteile eines zweiten Polyols, das einen numerischen Molekulargewicht-Durchschnitt im Bereich von 300 bis 1100 Dalton, eine Funktionalität im Bereich von 2,5 bis 4 und eine Hydroxylmenge im Bereich von 150 bis 300 mg KOH/g aufweist.

9. Schaum, erhältlich durch das Verfahren nach einem der vorhergehenden Ansprüche.

10. Schaum oder Verfahren nach einem der vorhergehenden Ansprüche, wobei der Schaum ein viskoelastischer Schaum ist.

11. Schaum oder Verfahren nach einem der vorhergehenden Ansprüche, wobei der Schaum eine Elastizität aufweist, die gemessen gemäß ASTM D3574 - Test H im Bereich von 5 bis 15 % liegt.

12. Schaum oder Verfahren nach einem der vorhergehenden Ansprüche, wobei der Schaum eine Erholungszeit von 4,5 s (s) aufweist, gemessen gemäß ASTM D3574-Test M, im Bereich von 5 bis 25.

13. Verwendung einer Aminkatalysatorkomponente bestehend aus:
i). einer Kombination von einer Polyolkomponente (pphp) von Triethylendiamin oder einer Form mit verzögerter Wirkung davon im Bereich von 0,23 bis 0,6 Gewichtsteilen pro 100 Gewichtsteile und wahlweise Bis(dimethylaminoethyl)ether oder einer Form mit verzögerter Wirkung davon im Bereich von 0,05 bis 0,20 pphp; oder
ii).einer Menge eines oder mehrerer tertiärer Amine, ausgewählt aus N,N,N',N'-Tetramethylhexamethylendiamin; N,N-Dimethylcyclohexylamin; N-(2-Dimethylaminoethyl)-N'-Methylpiperazin; N,N,N' ,N'-Tetramethylethylendiamin; N,N,N',N',N"-Pentamethyldiethylentriamin, Bis(2-dimethylaminoethyl)ether, N,N-Dimethylaminoethoxyethanol, N,N-Dimethylaminoethanol und N,N,N'-Trimethylaminoethylethanolamin oder Formen mit verzögerter Wirkung davon, die eine beschreibungsgemäße katalytische Gelier- und/oder Blasaktivität aufweisen, die äquivalent sind zu einer Kombination von Triethylendiamin oder einer Form mit verzögerter Wirkung davon im Bereich von 0,2 bis 0,6 pphp und wahlweise Bis(dimethylaminoethyl)ether oder eine Form mit verzögerter Wirkung davon im Bereich von 0,05 bis 0,20 pphp;
iii). in einem Verfahren zum Herstellen eines Polyurethanschaums, wobei das Verfahren das Kombinieren von Folgendem bei einem Isocyanatindex von höchstens 120 umfasst:
(a) einer Polyolkomponente, umfassend pro hundert Gewichtsteile:
i). 10 bis 70 Gewichtsteile eines ersten Polyols, das einen numerischen Molekulargewicht-Durchschnitt im Bereich von 2000 bis 12000 Dalton und eine Funktionalität im Bereich von 2 bis 6 aufweist; und
ii).90 bis 30 Gewichtsteile eines zweiten Polyols, das einen numerischen Molekulargewicht-Durchschnitt im Bereich von 300 bis 1500 Dalton, eine Funktionalität im Bereich von 2 bis 6 und eine Hydroxylmenge im Bereich von 100 bis 600 mg KOH/g aufweist;
(b) die Aminkatalysatorkomponente; und
(c) schaumbildende Reaktanten, die ein aromatisches Polyisocyanat umfassen,
(d) um den Polyurethanschaum zu erhalten,
(e) um der Bildung von aromatischem Diamin im Polyurethanschaum entgegenzuwirken und/oder die volle Anstiegszeit zu verkürzen.

## Revendications

1. Procédé de fabrication d'une mousse de polyuréthane consistant à combiner, à un indice d'isocyanate d'au plus 120 :
(a) un composant polyol comprenant, pour cent parties en poids :
i). de 10 à 70 parties en poids d'un premier polyol ayant un poids moléculaire moyen en nombre allant de 2 000 à 12 000 daltons, et une fonctionnalité allant de 2 à 6 ; et
ii). de 90 à 30 parties en poids d'un second polyol ayant un poids moléculaire moyen en nombre allant de 300 à 1 500 daltons, une fonctionnalité allant de 2 à 6 et un indice d'hydroxyle allant de 100 à 600 mg de KOH/g ;
(b) un composant de catalyseur d'amine comprenant :
i). de 0,23 à 0,6 partie pour cent parties en poids de composant polyol (pphp) de triéthylènediamine ou d'une de ses formes à action retardée, et éventuellement de 0,05 à 0,20 pphp de bis(diméthylaminoéthyl)éther ou d'une de ses formes à action retardée ; ou
ii). une quantité d'une ou plusieurs amines tertiaires, choisies parmi la N,N,N',N'-tétraméthyl hexaméthylènediamine ; la N,N-diméthylcyclohexylamine ; la N-(2-diméthylaminoéthyl)-N'-méthylpiperanize ; la N,N,N',N'-tétraméthyléthylène diamine ; la N,N,N',N',N"-pentaméthyldiéthylène triamine ; le bis(2-diméthylaminoéthyl)éther ; le N,N-diméthylaminoéthoxyéthanol ; le N,N-diméthylaminoéthanol ; et la N,N,N'-triméthylaminoéthyléthanolamine, ou l'une de leurs formes à action retardée ayant une activité catalytique de gélification et/ou de gonflement, telle que déterminée selon la description, équivalent à une combinaison de 0,2 à 0,6 pphp de triéthylènediamine ou d'une de ses formes à action retardée, et éventuellement de 0,05 à 0,20 pphp de bis(diméthylaminoéthyl)éther ou d'une de ses formes à action retardée ; et
(c) des réactifs générateurs de mousse comprenant un polyisocyanate aromatique afin d'obtenir la mousse de polyuréthane.

2. Procédé selon l'une quelconque des revendications précédentes, dans lequel la quantité de triéthylènediamine et/ou d'une forme à action retardée de triéthylènediamine dans (i) est d'au plus 0,4 pphp.

3. Procédé selon l'une quelconque des revendications précédentes, dans lequel la quantité de bis(diméthylaminoéthyl)éther et/ou d'une forme à action retardée de bis(diméthylaminoéthyl)éther dans (i) est d'au moins 0,10 pphp.

4. Procédé selon l'une quelconque des revendications précédentes, dans lequel la quantité de bis(diméthylaminoéthyl)éther et/ou d'une forme à action retardée de bis(diméthylaminoéthyl)éther dans (i) est d'au plus 0,14 pphp.

5. Procédé selon l'une quelconque des revendications précédentes, dans lequel le composant de catalyseur d'amine est constitué de 0,75 à 2,25 parties pour cent parties en poids de composant polyol (pphp) de N,N-diméthylaminoéthanol ou d'une de ses formes à action retardée, et éventuellement de 0,05 à 0,20 pphp de bis(diméthylaminoéthyl)éther ou d'une de ses formes à action retardée.

6. Procédé selon l'une quelconque des revendications précédentes, dans lequel le temps de montée complet, tel que mesuré selon la description, n'est pas supérieur à 250 secondes.

7. Procédé selon l'une quelconque des revendications précédentes, dans lequel le premier polyol est un polymère polyol dans lequel est dispersé un polymère solide de façon stable.

8. Procédé selon l'une quelconque des revendications précédentes, dans lequel le composant polyol comprend, pour cent parties en poids :
i). de 30 à 70 parties en poids dudit premier polyol ayant un poids moléculaire moyen en nombre allant de 2 500 à 4 000 daltons et une fonctionnalité allant de 2,5 à 4 ; et
ii). de 70 à 30 parties en poids dudit second polyol ayant un poids moléculaire moyen en nombre allant de 300 à 1 100 daltons, une fonctionnalité allant de 2,5 à 4 et un indice d'hydroxyle allant de 150 à 300 mg de KOH/g.

9. Mousse pouvant être obtenue par le procédé selon l'une quelconque des revendications précédentes.

10. Mousse ou procédé selon l'une quelconque des revendications précédentes, dans lequel la mousse est une mousse viscoélastique.

11. Mousse ou procédé selon l'une quelconque des revendications précédentes, dans lequel la mousse a une élasticité, mesurée selon le test H de la norme ASTM D3574, allant de 5 à 15 %.

12. Mousse ou procédé selon l'une quelconque des revendications précédentes, dans lequel la mousse a un temps de récupération de 4,5 s (s), mesuré selon le test M de la norme ASTM D3574, dans la plage allant de 5 à 25.

13. Utilisation d'un composant de catalyseur d'amine comprenant :
i). la combinaison de 0,23 à 0,6 partie pour cent parties en poids de composant polyol (pphp) de triéthylènediamine ou d'une de ses formes à action retardée, et éventuellement de 0,05 à 0,20 pphp de bis(diméthylaminoéthyl)éther ou d'une de ses formes à action retardée ; ou
ii).une quantité d'une ou plusieurs amines tertiaires, choisies parmi la N,N,N',N'-tétraméthyl hexaméthylènediamine ; la N,N-diméthylcyclohexylamine ; la N-(2-diméthylaminoéthyl)-N'-méthylpiperanize ; la N,N,N',N'-tétraméthyléthylène diamine ; la N,N,N',N',N"-pentaméthyldiéthylène triamine ; le bis(2-diméthylaminoéthyl)éther ; le N,N-diméthylaminoéthoxyéthanol ; le N,N-diméthylaminoéthanol ; et la N,N,N'-triméthylaminoéthyléthanolamine, ou l'une de leurs formes à action retardée ayant une activité catalytique de gélification et/ou de gonflement, telle que déterminée selon la description, équivalent à une combinaison de 0,2 à 0,6 pphp de triéthylènediamine ou d'une de ses formes à action retardée, et éventuellement de 0,05 à 0,20 pphp de bis(diméthylaminoéthyl)éther ou d'une de ses formes à action retardée ;
iii). dans un procédé de fabrication d'une mousse de polyuréthane, le procédé consistant à combiner, à un indice d'isocyanate d'au plus 120 :
(a) un composant polyol comprenant, pour cent parties en poids :
i). de 10 à 70 parties en poids d'un premier polyol ayant un poids moléculaire moyen en nombre allant de 2 000 à 12 000 daltons, et une fonctionnalité allant de 2 à 6 ; et
ii).de 90 à 30 parties en poids d'un second polyol ayant un poids moléculaire moyen en nombre allant de 300 à 1 500 daltons, une fonctionnalité allant de 2 à 6 et un indice d'hydroxyle allant de 100 à 600 mg de KOH/g ;
(b) ledit composant de catalyseur d'amine ; et
(c) des réactifs générateurs de mousse comprenant un polyisocyanate aromatique,
(d) pour obtenir la mousse de polyuréthane,
(e) dans le but de lutter contre la formation de diamine aromatique dans la mousse de polyuréthane et/ou de réduire le temps de montée complet.
